# EUROPÄISCHE PATENTSCHRIFT

(11) **EP 1 911 248 B1**
(45) Veröffentlichungstag und Bekanntmachung des Hinweises auf die Patenterteilung: **16.03.2011**
(21) Anmeldenummer: 06776541.2
(22) Anmeldetag: 01.08.2006
(51) Int. Cl.: H04L 29/08, H04L 29/06

(54) **VERFAHREN ZUR ERHEBUNG VON NUTZERVERHALTEN ZUR LAUFZEIT IM MOBILEN 3GPP IP BASIERTEN MULTIMEDIA SUBSYSTEM (IMS)**
METHOD FOR COLLECTING USER BEHAVIOR DURING RUN-TIME IN A MOBILE 3GPP IP-BASED MULTIMEDIA SUBSYSTEM (IMS)
PROCEDE POUR ETUDIER LE COMPORTEMENT D'UN UTILISATEUR PENDANT UNE CERTAINE DUREE DANS UN SOUS-SYSTEME MULTIMEDIA MOBILE 3GPP IP (IMS)

(30) Priorität: 04.08.2005 DE 102005037314; 29.11.2005 DE 102005057236
(43) Veröffentlichungstag der Anmeldung: 16.04.2008
(73) Patentinhaber: T-Mobile International AG, 53227 Bonn (DE)
(72) Erfinder: BLICKER, Stephan, 53343 Wachtberg-Villip (DE)
(74) Vertreter: Riebling, Peter
(86) Internationale Anmeldenummer: PCT/EP2006/007600
(87) Internationale Veröffentlichungsnummer: WO 2007/014751

(56) Entgegenhaltungen:
- EP-A- 1 551 144
- WO-A-02/098099
- US-A1- 2003 040 280
- RATY T ET AL: "Network traffic analyzing and monitoring locations in the IP Multimedia Subsystem" SOFTWARE ENGINEERING AND ADVANCED APPLICATIONS, 2005. 31ST EUROMICRO CONFERENCE ON PORTO, PORTUGAL 30-03 AUG. 2005, PISCATAWAY, NJ, USA,IEEE, 30. August 2005 (2005-08-30), Seiten 362-371, XP010842313 ISBN: 0-7695-2431-1

## Beschreibung

Die Erfindung betrifft ein Verfahren und eine Anordnung zur Erhebung des Nutzerverhaltens zur Laufzeit in einem mobilen 3GPP IP basierten Multimedia Subsystem (IMS).

Heutige Statistiksysteme in mobilen Kommunikationssystemen basieren meist auf einer Auswertung von Verbindungsdaten, sogenannten Call Data Records, CDR. Die Verbindungsdaten werden meist nach einer Sprachverbihdung erzeugt. Durch die Auswertung der Verbindungsdaten können wichtige Rückschlüsse auf das Nutzerverhalten des jeweiligen Kommunikationsteilnehmers gezogen werden, der sich im mobilen System durch seine MSISDN bzw. IMSI identifiziert. In Abhängigkeit des Nutzerverhaltens kann der Teilnehmer (Kunde) individuell, z.B. über Post, mit Informationen versorgt werden, und beispielsweise über bestimmte Aspekte, z.B. Tarife etc., informiert werden.

Derzeit werden Statistiken von IMS- oder SIP- basierte Diensten dadurch gesammelt, dass die Verbindungsdaten von speziellen Sammelfunktionen bewertet werden. Die CDRs werden von den Gebühren-Sammelfunktionen mittels beispielsweise des ftp (file transfer protocol) abgeholt. Die CDRs werden dann offline in den IT und Data Warehouse Systemen des Providers oder Netzbetreibers bewertet. Die Ergebnisse werden ausgelegt und es können Rückschlüsse in Bezug auf das Service-abhängige Nutzerverhalten gezogen werden. Folge dieser Rückschlüsse ist eine Reihe von Maßnahmen des Netzbetreibers oder Diensteproviders, zum Beispiel das Kreieren von Flugblättern (Flyers), Werbung in Werbesendungen und weiteres.

Die bisherigen Verfahren zum Sammeln von Statistiken und zum Erheben des Nutzerverhaltens sind langsam, so dass nicht aktuell auf das Nutzerverhalten reagiert werden kann.

In den Veröffentlichungen EP 1 551 144 A1 und WO 02/098099 A1 sind Verfahren und Einrichtungen zum Erfassen und Sammeln von Nutzerdaten von Kommunikationsteilnehmer bei der Nutzung von IMS- oder SIP-basierten Diensten im mobilen IP basierten Multimedia Subsystem, IMS, offenbart. wobei eine Bewertung des Service-abhängigen Nutzerverhaltens von Kommunikationsteilnehmern während eines Verbindungsaufbaus mit einer Anwendung durchgeführt wird.

Es ist die Aufgabe der Erfindung, ein Verfahren und ein System zur Erhebung des Nutzerverhaltens zur Laufzeit in mobilen IMS Kommunikationsnetzen anzugeben, das eine verbesserte Kundeninformation im mobilen IMS Kommunikationsnetz erlaubt.

Diese Aufgabe wird erfindungsgemäß durch die Merkmale der unabhängigen Ansprüche gelöst, auf deren Inhalt an dieser Stelle verwiesen wird.

Bevorzugte Ausgestaltungen der Erfindung sind in den abhängigen Ansprüchen angegeben, auf deren Inhalt an dieser Stelle verwiesen wird.

Das erfindungsgemäße Verfahren zur Erhebung von Nutzerverhalten zur Laufzeit im mobilen 3GPP IP basierten Multimedia Subsystem (IMS), ermöglicht eine Übertragung von nutzerverhaltensabhängigen Informationen zum mobilen Endgerät, beispielsweise in Form von Werbung, Klingeltönen, Bildern, Clips. Das Verfahren stützt sich auf eine neue technische Komponente OSAS (Online Statistics and Advertisement Server), die als Applikationsserver in das IMS integriert wird. Mit dem OSAS System können für IP basierte Dienste StatistikDaten zur Laufzeit erhoben und bewertet werden, sodass zur Laufzeit, also während des Gesprächsaufbaus, ein Teilnehmer schon mit entsprechenden Informationen versorgt werden kann. Diese Informationen können in unterschiedlichen (multimedialen) Medien hinterlegt sein, z.B. Bilder, Text, Musik, Videos.

Der Online Server für Statistiken und Werbung (OSAS)

Der Online Server für Statistiken und Werbung OSAS ist eine neue Anwendungsserverkomponente, die in die IMS Session Anwendungen und in den entsprechenden Signalisierungsverkehr eingebunden wird. Im Vergleich zu den CDR basierten Statistiken wie in der Einleitung beschrieben sorgt der OSAS für folgende bedeutende Vorteile:
- Möglichkeit einer Online-Bewertung des Nutzerverhaltens während der Laufzeit der Anwendung, quasi in Echtzeit. Die Ergebnisse können online eingesehen werden und nicht offline wie bei der Auswertung der CDRs mit einer damit verbundenen Verzögerung von mindestens einigen Stunden.
- Online Werbung und Information des Teilnehmers ist möglich, während des Verbindungsaufbaus und während der Verbindung, in Abhängigkeit der Statistikdaten, die über den Nutzer gewonnen werden.
   - beispielsweise Tarif Alternativen können bekannt gemacht werden
   - beispielsweise können neue Dienste beworben werden
   - beispielsweise können Medien während des Verbindungsaufbaus übertragen werden
- Die Möglichkeit der Auswertung von Nutzungsdaten und Teilnehmerverhalten während des Verbindungsaufbaus ermöglicht sogar die Option IMS Dienste, ähnlich bekannter GSM Dienste wie beispielsweise dem TMO Soundlogo Dienst, auf IMS Niveau anzubieten unter Verwendung von MIME Typen während des Sitzungsaufbaus wie
   - Bilder [jpg, tiff, gif, ...]
   - Text [ASCII, UTF8, ...]
   - Musik [wav, mpeg, ... wie beim Soundlogo Dienst]
- Das Konzept, Redirect Mechanismen zu nutzen, um nutzerabhängige Daten zu sammeln, ist gut bekannt in den Internet- und http-Welten (sog. Adserver redirects). Eine Verifizierung des Konzeptes sollte daher für IMS basierte Dienste einfach zur Verfügung zu stellen sein.

### Anwendungsfälle

Viele Anwendungsfälle können hergeleitet werden durch Verwendung IMS basierter Dienste und online-Sammeln von Statistiken und Bereitstellen von Online Werbung und anderen Informationen beispielsweise:
- Verbindungsaufbau zum Push to Talk Server für abgehenden Mobilverkehr
- Verbindungsaufbau zum Push to Talk Server für ankommenden Mobilverkehr
- Verbindungsaufbau für Videotelephonie für abgehenden Mobilverkehr
- Verbindungsaufbau für Videotelephonie für ankommenden Mobilverkehr
- Verbindungsaufbau für kombinierte Push to Talk und Präsenz-Dienste für abgehenden Mobilverkehr

Nachfolgend wird die Erfindung anhand der Zeichnungen näher beschrieben.
Figur 1 zeigt beispielhaft eine IMS-Architektur mit dem erfindungsgemäßen Online Server für Statistiken und Werbung (OSAS).
Figur 2 zeigt den Ablauf eines Verbindungsaufbaus bei einem abgehenden Mobil-Gespräch für beispielsweise Videotelefonie unter Berücksichtigung des OSAS.
Figur 3 zeigt den grundsätzlichen Ablauf eines Gesprächsaufbaus für Push to Talk unter Berücksichtigung des OSAS.

### Architektur und Voraussetzungen

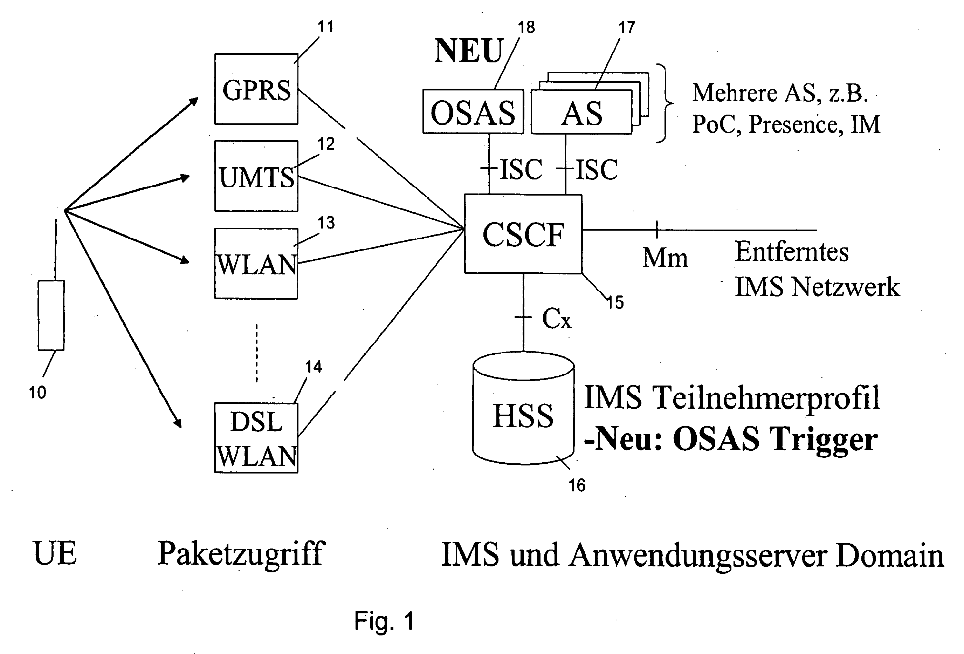

Figur 1 zeigt eine schematische Darstellung einer IMS-Architektur, welche in bekannter Weise drei Haupt-Komponentenebenen aufweist. An der Spitze befindet sich die Anwendungsebene, die unterschiedlichste Anwendungsserver, AS, z.B. einen PoC Anwendungsserver 17, in Sprach- und Nicht-Sprachnetzen unterstützt. Teilnehmer, die einen Dienst aktivieren oder deaktivieren wollen, erreichen die Anwendungsserver mittels ihres Endgeräts 10 über ein Web-Portal aus ihrem jeweiligen Kommunikationsnetz, wie z.B. GPRS 11, UMTS 12, WLAN 13, DSL 14, etc. Die zweite Ebene enthält die sogenannte Call Session Control Function, CSCF, 15 zur Registrierung der Netz-Endpunkte und zum Routen der SIP-Signalisierung an die jeweiligen Anwendungsserver 17 und entfernte IMS Netze. Komponenten der ersten wie auch der zweiten Ebene nutzen einen Home Subscriber Server, HSS, 16, eine übergeordnete Ressource zum Ermitteln der geeigneten Dienste. Der HSS 16 führt die kundenindividuellen Serviceprofile mit Bestandteilen wie IP-Adresse, Roaminginformation, Empfängerlisten und gebuchten Anruf- und Voice-Mail-Diensten. Die Transport- und Endpunktebene schließlich übernimmt das Session-Setup via SIP-Signalisierung und Trägerdienste wie das Paketieren von Sprache. Diese Ebene verfügt über Media-Gateways für das Konvertieren von VoIP zu TDM. Für Funktionen wie Conferencing und Spracherkennung, eingesetzt in verschiedensten Applikationen einschließlich Voice-Mail und interaktives VXML, steht ein Pool von Mediaservem zur Verfügung. Erfindungsgemäß ist ein Online Server für Statistiken und Werbung, OSAS, 18 vorgesehen, der in gleicher Weise wie die Anwenungsserver 17 mit dem CSCF 15 verbunden ist.

Die erfindungsgemäße Architektur basiert auf der IMS Architektur wie sie standardisiert ist für den 3GPP UMTS Release 5 aufwärts, z.B. in "Digital cellular telecommunications system (Phase 2+)"; Universal Mobile Telecommunications System (UMTS); IP Multimedia Subsystem (IMS); Stage 2 (3GPP TS 23.228 version 6.8.0 Release 6). Auf den Inhalt dieser Spezifikation wird verwiesen.

Das im HSS 16 vorhandene IMS Teilnehmer-Profil beinhaltet neue Triggerpunkte für spezielle Anwendungsserver, insbesondere den OSAS 18. Der OSAS 18 wird als eine neue Applikation in den Nachrichtenfluss (Spiralling Flow) des IMS eingefügt. Der OSAS 18 hat Zugang zur gesamten relevanten SIP Signalisierung und zu den Signalisierungsdaten während des Sitzungsaufbaus. Der OSAS kann daraus online alle für eine Erhebung des Nutzerverhaltens relevanten Parameter erfassen und auswerten, nämlich aus:
- FROM und TO Adressfeldern
- A Party
- B Party
- benutztem Dienst
- benutzten Codecs
- Sitzungsdauer
- für die Vergebührung relevante Inter Operator Parameter wie lOl
- prinzipiell alle Information in den entsprechenden SIP Meldungen (z.B. SIP invite)
- viele andere SIP und SDP Parameter

### Beispiele für Hoch-Niveau-Gesprächsfluss

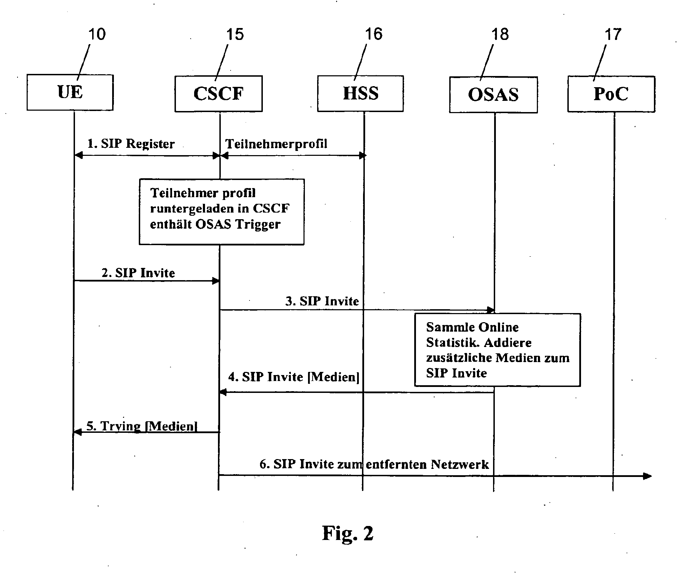

### a) Figur 2 zeigt den grundlegenden Verbindungsaufbau eines abgehenden Mobil-Gesprächs für beispielsweise Videotelefonie.

### 1. SIP Register

Das mobile Endgerät 10 sendet eine SIP Register Meldung zur Einbuchung in die Call State Control Funktion, CSCF, 15. Nach erfolgreichem Authentifizierungsverfahren (hier nicht dargestellt) wird das Teilnehmerprofil aus dem HSS 16 in die CSCF 15 geladen. Es enthält einen speziellen OSAS Trigger mit dem die OSAS Funktionen aufgerufen werden.

### 2. SIP INVITE (SIP Teil, SDP Teil)

Das mobile Endgerät 10 sendet eine SIP INVITE Meldung zur Call State Control Funktion 15, um eine SIP Sitzung einzuleiten (z.B. für Videotelephonie). Die SIP Invite Meldung wird von der CSCF 15 erkannt. Der OSAS Trigger wird ebenfalls erkannt und sorgt für die Weiterleitung der Meldung zum OSAS 18.

### 3. SIP Invite (SIP Teil, SDP Teil)

Aus der weitergeleiteten SIP INVITE Meldung kann das OSAS 18 online Statistikdaten aus dem SIP und SDP Teil der Meldung entnehmen. Zudem kann es Medien zum SIP Invite hinzufügen.

### 4. SIP Invite (SIP Teil, SDP Teil + zusätzliche Medien)

Die SIP Invite Meldung wird jetzt vom OSAS 18 zum CSCF 15 zurückgeleitet. Die Meldung kann zusätzliche Medien enthalten, die vom OSAS 18 eingefügt wurden.

### 5. Trying (Provisional response + Zusätzliche Medieninhalte)

Eine "Provisional Response" wird vom SCSF 15 zum mobilen Endgerät 10 gesendet. Sie beinhaltet die vom OSAS 18 hinzugefügten zusätzlichen Medien, wie Text-Werbung, Musik (ähnlich dem Soundlogo, Klingelton), Bilder oder irgendwelche anderen Medieninhalte gemäß den IETF MIME Typen.

### 6. SIP Invite (SIP Teil, SDP Teil)

Der SIP Invite bzw. Verbindungsaufbau wird weitergeleitet zu einem entfernten Netzwerk, ohne die zusätzlichen Medien. Die CSCF 15 bewirkt das Löschen der zusätzlichen Mediendaten, die vom OSAS 18 kommen, beispielsweise in Abhängigkeit von Vorgaben des Netzbetreibers oder Providers.

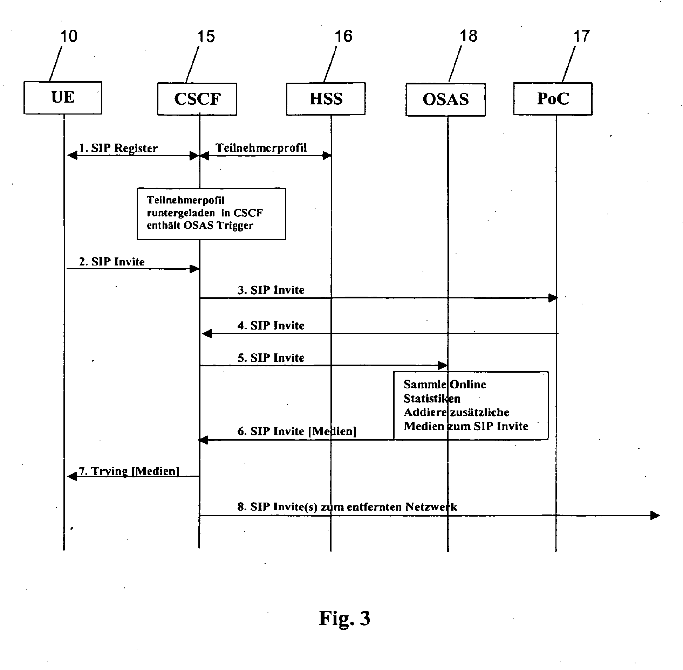

### b) Figur 3 zeigt den grundsätzlichen Mobilfunk-Gesprächsaufbau für Push to Talk.

### 1. SIP Register

Das mobile Endgerät 10 sendet eine SIP Register Meldung zur Einbuchung in die Call State Control Funktion, CSCF, 15. Nach erfolgreicher Authentifizierung (hier nicht dargestellt) wird das Teilnehmerprofil vom HSS 16 in die CSCF 15 geladen. Es enthält einen PoC Trigger und einen spezifischen OSAS Trigger.

### 2. SIP Invite (SIP Teil, SDP Teil)

### 3. SIP Invite (SIP Teil, SDP Teil)

Das mobile Endgerät 10 sendet eine SIP Invite Meldung zur CSCF 15, um eine PoC Verbindung aufzubauen. Die SIP Invite Meldung wird an der CSCF 15 erkannt. Die CSCF 15 stellt den PoC Trigger zur Verfügung und leitet die Anfrage an einen PoC Anwendungsserver 17 weiter.

### 4. SIP Invite (SIP Teil, SDP Teil, PoC spezifische Information)

Der PoC Server 17 sendet die Invite Meldung zurück an die CSCF 15 und liefert zusätzliche PoC spezifische Informationen.

### 5. SIP Invite (SIP Teil, SDP Teil)

Die SIP Invite Meldung wird erneut an der CSCF 15 erkannt. Der OSAS Trigger sorgt für eine Weiterleitung der Invite Meldung an den OSAS 18.

### 6. SIP Invite (SIP Teil, SDP Teil + zusätzliche Medien)

Der OSAS 18 kann online Statistiken aus dem SIP- und dem SDP-Teil entnehmen, zusätzlich kann er Medien zur SIP Invite Meldung hinzufügen und diese zurück an die CSCF 15 senden.

### 7. Trying (Provisional response + zusätzliche Medien)

Eine "provisional response" wird von der CSCF 15 zum Endgerät 10 gesendet. Es beinhaltet vom OSAS 18 hinzugefügte zusätzliche Medien wie z.B. Text Werbung, Musik (wie. z.B. Soundlogo, Klingelton, Bilder oder irgendwelche anderen Medien) gemäß den IETF MIME Typen.

### 8. SIP Invite (SIP Teil, SDP Teil)

Die SIP Invite Meldung wird weitergeleitet zu einem entfernten Netzwerk und beinhaltet nicht die zusätzlichen Medieninhalte. Die CSCF 15 sorgt dafür, die zusätzlichen, vom OSAS 18 bereitgestellten Medieninhalte zu löschen, beispielsweise abhängig von den Netzbetreibervorgaben.

Der OSAS 18 stellt Mittel bereit, um online sehr schnell Statistikdaten zu sammeln so dass diese von mobilen Netzbetreibern ausgewertet werden können. Der OSAS 18 stellt Mittel bereit, um Mediendaten in den Signalfluss beim Verbindungsaufbau einzuschleusen, damit diese am Endgerät 10 des Nutzers eingespielt werden, z.B. Amtzeichen Töne, Werbebilder, Werbetexte usw. gemäß den IETF MIME Typen.

Das Konzept des OSAS ist in der Internetwelt bekannt und zwar wird dort HTTP Redirect für Werbezwecke verwendet. Der OSAS ist in der Lage, dynamisch den Endnutzer zu beeinflussen indem es online Statistikdaten in Bezug auf Dienste- und / oder auf Teilnehmer-Niveau auswertet und die passende Werbung zum Kunden einspielt.

### Abkürzungen

| | |
|---|---|
| AS | Anwendungs-Server (Application Server) |
| CDR | Ausführlicher Anrufbericht (Call Detailed Record) . |
| CSCF | Rufzustandsüberwachungsfunktion (Call State Control Function) |
| HSS | Heimat Teilnehmer Server (Home Subscriber Server) |
| OSAS | Online Statistik- und Werbungs-Server (Online Statistics and Advertisement server) |
| PoC | Sprechfunkfunktion über Mobilfunk (Push to Talk over Cellular) |
| SDP | Sitzungsbeschreibungsprotokoll (Session Description Protocol) |
| SIP | Sitzungseinleitungsprotokoll (Session Initiation Protocol) |

## Patentansprüche

1. Verfahren zum Sammeln von Statistikdaten von IMS- oder SIP-basierten Diensten im mobilen IP basierten Multimedia Subsystem, IMS, wobei eine Bewertung des Service-abhängigen Nutzerverhaltens von Kommunikationsteilnehmern während eines Verbindungsaufbaus mit einer Anwendung durchgerührt wird, **dadurch gekennzeichnet, dass** ein Online Server für Statistiken und Werbung, OSAS, (18) als eine neue Anwendungsserverkomponente in IMS Session Anwendungen und in den entsprechenden Signalisierungsverkehr eingebunden wird, und der OSAS (18) für IP basierte Dienste Statistikdaten zur Laufzeit erhebt und bewertet und in der Lage ist, während des Gesprächsaufbaus Informationen an ein Endgerät (10) eines Teilnehmers zu übermitteln, in Abhängigkeit der erhobenen Statistikdaten.

2. Verfahren nach Anspruch 1, **dadurch gekennzeichnet, dass** die Informationen in unterschiedlichen multimedialen Medien hinterlegt sind.

3. Verfahren nach einem der Ansprüche 1 oder 2, **dadurch gekennzeichnet, dass** in einem im Home Subscriber Server, HSS, (16) vorhandenen IMS Teilnehmerprofil Triggerpunkte für einen Aufruf des OSAS (18) eingerichtet werden.

4. Verfahren nach einem der Ansprüche 1 bis 3, **dadurch gekennzeichnet, dass** der OSAS (18) Zugriff auf die gesamte relevante SIP Signalisierung und zu den Signalisierungsdaten während des Sitzungsaufbaus hat und daraus online alle relevanten Parameter erfassen kann.

5. Verfahren nach Anspruch 4, **dadurch gekennzeichnet, dass** die Parameter umfassen:
- FROM und TO Adressfelder
- A Party
- B Party
- benutztem Dienst
- benutzten Codecs
- Sitzungsdauer
- für die Vergebührung relevante Inter Operator Parameter wie lOl
- alle Information in den entsprechenden SIP Meldungen (z.B. SIP invite)
- SIP und SDP Parameter

6. System zum Sammeln von Statistikdaten von IMS- oder SIP-basierten Diensten in einem mobilen IP Multimedia Subsystem zur Durchführung des Verfahrens gemäß den Ansprüchen 1 bis 5, **gekennzeichnet durch** eine Datenverarbeitungseinheit in Form eines Online Server für Statistiken und Werbung, OSAS, (18), welche ausgebildet ist, um Daten zu sammeln während ein Verbindungsaufbau mit einer Anwendung durchgeführt wird.

7. System nach Anspruch 6, **dadurch gekennzeichnet, dass** der OSAS (18) mit einer Call State Control Function, CSCF, (15) des IMS verbunden ist.

## Claims

1. Method for collecting statistical data of IMS or SIP-based services in the mobile IP-based multimedia subsystem IMS, wherein evaluation of the service-dependent user behaviour of communications subscribers during establishment of a connection to an application is carried out, **characterised in that** an online statistics and advertisement server OSAS (18) is integrated in IMS session applications and in the corresponding signalling communications as a new application server component, and the OSAS (18) for IP-based services collects and evaluates statistical data on the run time and is able to forward information to a terminal (10) of a subscriber during establishment of a conversation, as a function of the statistical data collected.

2. Method according to claim 1, **characterised in that** the information is deposited in different multimedia media.

3. Method according to one of claims 1 or 2, **characterised in that** in an IMS subscriber profile which is present in the home subscriber server HSS (16), trigger points are set up for calling up the OSAS (18).

4. Method according to one of claims 1 to 3, **characterised in that** the OSAS (18) has access to all relevant SIP signalling and to the signalling data during establishment of a session and can collect all relevant parameters therefrom online.

5. Method according to claim 4, **characterised in that** the parameters comprise:
- FROM and TO address fields
- A party
- B party
- service used
- codecs used
- duration of session
- inter-operator parameters relevant to charging such as IOI
- all information in the corresponding SIP messages (e.g. SIP invite)
- SIP and SDP parameters.

6. System for collecting statistical data of IMS or SIP-based services in a mobile IP-based multimedia subsystem for carrying out the method according to claims 1 to 5, **characterised by** a data processing unit in the form of an online statistics and advertisement server OSAS (18), which is designed to collect data while establishment of a connection to an application is being carried out.

7. System according to claim 6, **characterised in that** the OSAS (18) is linked to a call state control function CSCF (15) of the IMS.

## Revendications

1. Procédé pour recueillir des données statistiques de services IMS ou SIP dans le sous-système multimédia IP mobile, selon lequel une évaluation du comportement d'utilisateur d'abonnés de communication, dépendant du service, est effectuée pendant l'appel avec une application, **caractérisé en ce qu'**un serveur en ligne pour les statistiques et la publicité, OSAS, (18) est intégré comme nouveau composant de serveur d'application dans des applications de session IMS et dans le trafic de signalisation correspondant, et l'OSAS (18) relève et évalue au moment de la communication des données statistiques pour des services IP et est en mesure de transmettre des informations à un terminal (10) d'un abonné pendant la conversation, en fonction des données statistiques relevées.

2. Procédé selon la revendication 1, **caractérisé en ce que** les informations sont stockées dans différents supports multimédia.

3. Procédé selon l'une des revendications 1 ou 2, **caractérisé en ce que** dans un IMS présent dans un serveur HSS, Home Subscriber Server, (16), des points de déclenchement de profil d'abonné sont installés pour un appel de l'OSAS (18).

4. Procédé selon l'une des revendications 1 à 3, **caractérisé en ce que** l'OSAS (18) a accès pendant la session à toute la signalisation SIP pertinente et aux données de signalisation, et peut relever à partir de là, en ligne, tous les paramètres pertinents.

5. Procédé selon la revendication 4, **caractérisé en ce que** les paramètres comprennent :
- champs d'adresse FROM et TO
- partie A
- partie B
- service utilisé
- codecs utilisés
- durée de la session
- paramètres interopérateur importants pour la facturation, comme IOI
- toutes les informations dans les messages SIP correspondants (par exemple invitation SIP)
- paramètres SIP et SDP.

6. Système pour recueillir des données statistiques de services IMS ou SIP dans un sous-système multimédia IP mobile, pour mettre en oeuvre le procédé selon les revendications 1 à 5, **caractérisé par** une unité de traitement de données sous la forme d'un serveur en ligne pour les statistiques et la publicité, OSAS, (18), qui est conçue pour recueillir des données pendant un appel avec une application.

7. Système selon la revendication 6, **caractérisé en ce que** l'OSAS (18) est relié à une fonction de contrôle d'appel, CSCF, (15) de l'IMS.
